# EUROPÄISCHE PATENTSCHRIFT

(11) **EP 2 452 590 B1**
(45) Veröffentlichungstag und Bekanntmachung des Hinweises auf die Patenterteilung: **28.08.2013**
(21) Anmeldenummer: 11187078.8
(22) Anmeldetag: 28.10.2011
(51) Int. Cl.: A47B 9/20, A47B 13/08, A47B 96/20, B32B 21/08

(54) **Holzwerkstoff-basierte Tischplatte**
Wood material-based table top
Plateau de table basé sur une matière dérivée du bois

(30) Priorität: 16.11.2010 DE 202010012905 U
(43) Veröffentlichungstag der Anmeldung: 16.05.2012
(73) Patentinhaber: Werzalit GmbH + Co. KG, 71720 Oberstenfeld (DE)
(72) Erfinder: Asseier, Bernd, 74354 Besigheim (DE); Golombek, Jörg, 71720 Oberstenfeld (DE); Schulte, Dr. Matthias, 71720 Oberstenfeld (DE)
(74) Vertreter: 2K Patentanwälte Blasberg Kewitz & Reichel

(56) Entgegenhaltungen:
- EP-A2- 0 197 324
- WO-A1-99/01296
- DE-B4- 19 903 912

## Beschreibung

Die Erfindung betrifft eine aus Holzwerkstoff hergestellte Tischplatte für den Außenbereich mit den Merkmalen gemäß dem Oberbegriff des Anspruchs 1. Außerdem betritt die Erfindung ein Verfahren zum Ausbau einer Holzwerkstoff-basierten Tischplatte für den Einsatz im Außenbereich. Insbesondere betrifft die Erfindung eine Tischplatte, die einen Formkörper aufweist, der aus einer span- oder faserförmigen mit Bindemittel versetzten Pressmasse gefertigt ist, und der auf seiner Oberseite und Unterseite mit je einer Kunststoffschicht bedeckt ist, wobei die Kunststoffschicht auf der Oberseite als Dekorschicht ausgebildet ist. Des weiteren zeigen die Dokumente EP 0 197 324, DE 199 03 912, WO 99 01296 bekannte Tischplatten aufbauten.

Tischplatten dieser Art sind seit langem hinlänglich bekannt und werden von der Anmelderin seit Jahren in großer Zahl gefertigt und erfolgreich am Markt vertrieben.

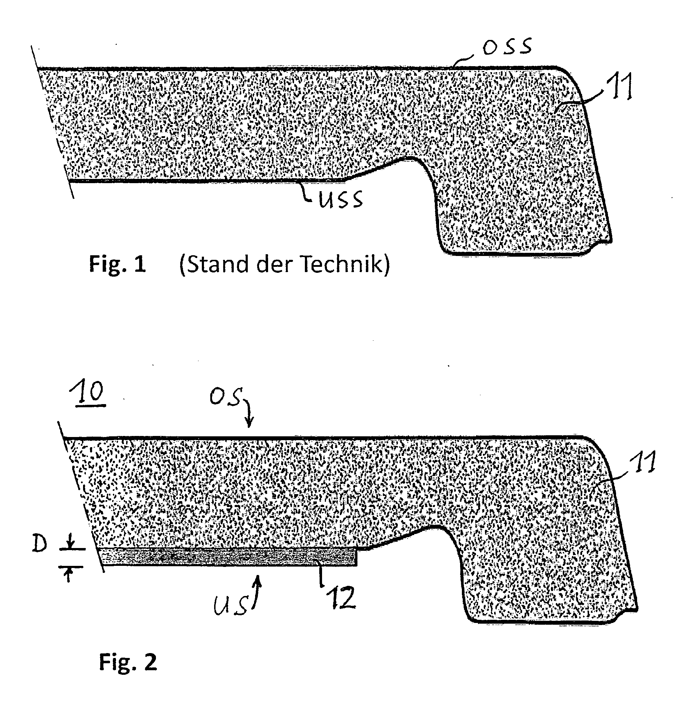

In der Deutschen Gebrauchsmusterschrift G 820 94 21 ist beispielsweise eine solche Tischplatte beschrieben. Die beiliegende Figur 1 nimmt Bezug auf den Aufbau einer solchen Tischplatte und stellt in einer Querschnittsansicht die innere und äußere Struktur der Platte dar. Demnach ist es bekannt, eine Tischplatte bestehend aus einem Formkörper 11 zu fertigen, der sowohl auf der Oberseite wie auf der Unterseite mit einer Kunststoffschicht bedeckt ist. Die oberseitige Schicht OSS ist als Dekorschicht ausgebildet. Die unterseitige Schicht USS ist üblicherweise in einem neutralem Farbton, z. B. Beige, gehalten. Der Formkörper 11 wird einstückig hergestellt aus einer mit span- oder faserförmigen und mit Bindemittel versetzten Pressmasse. Dazu hat die Anmelderin ein seit Jahren bewährtes Verfahren entwickelt und fortlaufend verbessert. Bei der Pressmasse kann es sich beispielsweise um zerkleinerte lignozellulosehaltige Teilchen, wie etwa zerkleinerte und getrocknete Holzspänne, Bagassefasern und ähnliches, handeln, denen ein wärmehärtbares Kunstharz, wie z.B. ein Melamin-Harnstoffformaldehyd- oder Phenolformaldehyd-Harz beigemischt ist. Als Fasern können auch Fasergemische von verschiedenen Werkstoffen verwendet werden, denen entsprechende, vorzugsweise organische, Bindemittel zugemischt sind. Zum Herstellen des Formkörpers 11 bzw. Formteils wird das Gemisch in ein Vorpresswerkzeug mit einer Schichtdicke eingefüllt, die etwa das drei- bis siebenfache des fertigen Formkörpers betragen kann. Durch Einfahren eines Pressstempels wird die Masse vorgepresst und dabei nahezu auf ihr Endmaß hin verdichtet. Der derart hergestellte Vorpressling wird dann unter Druck und Temperatureinwirkung ausgehärtet. Anschließend erfolgt die Bedeckung mit einem Dekoraufbau, der eine Dekorfolie sowie ein oder mehrere Underlays umfasst. Dazu wird ein Heißpresswerkzeug eingesetzt. Alternativ kann in einem einstufigen Verfahren der Vorpressling unter Einwirkung von Druck und Wärme (ca. 130° bis 160° C) in seine endgültige Form gebracht , dabei ausgehärtet und gleichzeitig mit der Dekorschicht umhüllt werden. Die Dekorschicht OSS bzw. die Unterschicht USS weisen eine Dicke von ca. 0,1 bis 2 mm auf. Die Tischplatte hat eine Stärke von etwa 16 mm (Bereich 6-25 mm); im Randbereich etwa 30 mm (10-40 mm). Die derart hergestellten Tischplatten (siehe Aufbau nach Fig. 1) sind besonders gut geeignet, im Außenbereich, d. h. auf Balkonen, Terrassen, Plätzen und in Gärten, aufgestellt zu werden, da sie sich als sehr witterungsbeständig erwiesen haben. Denn bei dem genannten Herstellungsverfahren wird der Rohling bei Temperaturen von etwa 150 °C heiß gepresst, wodurch die gleichartigen Harze in Kern- und Oberflächenmaterial aushärten, so dass ein Materialverbund entsteht, der besonders widerstandsfähig gegen Hitze, Nässe und mechanische Beanspruchung ist. Es können Tischplatten in verschiedensten Größen, Formen und Farben bzw. mit verschiedensten Dekoren hergestellt werden.

Die DE 199 03 912 A1 offenbart einen mehrschichtigen Laminatträger (s. dort Fig. 1A) mit einer Overlayschicht 1, die auf eine obere Schicht aus Dekorpapier zum Schutz derselben auflaminiert ist, und mit dem darunter befindlichen eigentlichen Laminatträger 10 (MDF- oder Spanplatte). Um eine Asymmetrie im Aufbau zu vermeiden und um bei der Herstellung bzw. Anfertigung die durch die oberen Schichten entstehenden Spannungen auszugleichen, wird ein Gegenzug 11 vorgesehen, d.h. eine auf der Unterseite auflaminierte Schicht, die schließlich zu einer symmetrischen Schichtstruktur führt, welche vermeidet, dass das Laminat sich bei der Herstellung verzieht. Solche Gegenzüge werden üblicherweise durch dünne Beschichtungen bzw. Folien von geringer Stärke (0,2 - 1 mm) realisiert.

Die WO 99/01296 beschreibt einen Dekor-Laminatwerkstoff mit einem Grundsubstrat aus einem Holzwerkstoff, der zur Anfertigung von Platten geeignet ist und mit einer mehrlagigen Beschichtung auf der Sichtseite (zumeist Oberseite) versehen sein kann (siehe dort Seite 2, Zeilen 17-23). Auf der Gegenseite (Unterseite) wird im Herstellungsverfahren ebenfalls eine Gegenzug-Beschichtung aufgebracht, um ein Verziehen oder Krümmen der Platte zu vermeiden.

Aus der DE 35 08 438 A1 ist eine gepresste Mehrschichtplatte bekannt, die u.a. als Arbeitsplatte für Küchen hergestellt werden kann.

Das Vorlesungs-Skript "Holzphysik" von Prof. Dr. Ing. habil. Peter Niemz vom Institut für Baustoffe, an der ETH Zürich, September 2006 behandelt auf Seiten 25-42 die wissenschaftliche Einteilung von Holzwerkstoffen und die Arten von Klebstoffen, die z.B. zur Herstellung von Span-oder Faserplatten verwendet werden können. Auch werden das Strukturmodell und Eigenschaften von Spanplatten sowie Faserplatten (s. Abb. 32 und 35 sowie Seiten 35-39) behandelt. Auf Seiten 68-70 wird der Klebevorgang behandelt, wobei insbesondere auf Schmelzverfahren und die Verklebung mit Lösungsmittelklebern Bezug genommen wird. Die Herstellung und Verwendung von Tischplatten wird nicht näher behandelt.

Beim Einsatz bzw. Verwendung der Tischplatten im Außenbereich hat es sich gezeigt, dass eine starke Sonneneinstrahlung oder ähnliche einseitige Wärmeeinwirkung von oben dazu führen kann, dass die Tischplatten, insbesondere solche, die eine dunkle Oberfläche aufweisen, einen gewissen konkaven Verzug erleiden. Es kann sich eine leichte muldenförmige Absenkung im Innenbereich der Platte ausbilden. Diese ist zwar reversibel, wenn die Platte nicht mehr der direkten Wärmestrahlung ausgesetzt ist. Jedoch kann es eine längere Zeit (bis zu etwa 1 Woche) dauern, bis der Formverzug sich nahezu vollständig zurückgebildet hat.

Daher ist es Aufgabe der vorliegenden Erfindung dem oben genannten Problem zu begegnen und eine Tischplatte bereitzustellen, die auch bei starker einseitiger Wärmebestrahlung in ihrer Form äußerst stabil bleibt. Außerdem soll die Tischplatte auch bei Belastung resistent gegen Verzug sein.

Gelöst wird die Aufgabe durch eine Tischplatte mit den Merkmalen des Anspruchs 1. Demnach wird vorgeschlagen, auf der Unterseite der bereits fertigen (angefertigten) Tischplatte nachträglich eine Beschichtungsplatte kraftschlüssig anzubringen, deren Stärke um ein Vielfaches größer ist als die Dicke der Kunststoffschichten bzw. der Dekorschicht.

Die Erfindung geht nämlich von der Erkenntnis aus, dass die in der Tischplatte bzw. dem Formkörper 11 verbleibende Restfeuchte von etwa 10% bei einseitiger Sonnen- bzw. Wärmeeinstrahlung und/oder die Belastung zu dem besagten konkaven Formverzug der Tischplatte führt und dass diesem effektiv durch nachträgliches Anbringung einer Beschichtungsplatte auf der Unterseite der produzierten Tischplatte entgegengewirkt werden kann.

Daher wird auch ein entsprechendes Verfahren zum Ausbau einer Holzwerkstoff-basierten Tischplatte für den Einsatz im Außenbereich gemäß dem nebengeordneten Anspruch vorgeschlagen, bei dem auf der Unterseite der gefertigten Tischplatte nachträglich eine Beschichtungsplatte kraftschlüssig aufgebracht wird, deren Stärke um ein Vielfaches größer ist als die Dicke der Kunststoffschichten. Vorzugsweise ist die Beschichtungs- bzw. Verstärkungsplatte mindestens 1,5 mm stark.

In einem Ausführungsbeispiel der Erfindung wird die Beschichtungsplatte mit der Unterseite der Tischplatte verklebt. Dies geschieht insbesondere mittels eines reaktiven Klebers, insbesondere eines Epoxy-, Polyester-, Polyurethan-, Acrylat-Klebers, oder mittels eines Schmelz- oder Heiß-Klebers. Alternativ oder auch zusätzlich dazu kann die Beschichtungsplatte mit der Unterseite der Tischplatte an mehreren Fixierungspunkten mechanisch verbunden, insbesondere verschraubt, werden.

Es ist wesentlich, dass die Beschichtungsplatte eine Stärke aufweist, die um ein Vielfaches größer ist als die Dicke der Kunststoffschichten, so dass die Beschichtungsplatte sowohl mechanisch verstärkend wirkt wie auch thermisch die Unterseite der Tischplatte verbessert. Mit mechanischer Verstärkung ist hier gemeint, dass die auf der Unterseite aufgebrachte Beschichtungsplatte die bei einem Verzug auftretenden Spannungen aufnimmt und diesen entgegenwirkt. Mit thermischer Verbesserung ist gemeint, dass die Beschichtungsplatte die Unterseite der Tischplatte isoliert und somit ebenfalls dem Verzug entgegen wirkt.

Bevorzugte Ausführungsformen der Erfindung ergeben sich aus den Unteransprüchen.

Nachfolgend wird die Erfindung anhand von Ausführungsbeispielen und unter Bezugnahme der beiliegenden Figuren 2 bis 4 näher beschrieben, wobei:
- die Fig. 2: in einer Querschnittsansicht das Profil bzw. den Aufbau einer erfindungsgemäßen Tischplatte darstellt;
- die Fig. 3: die Ansicht der Unterseite der erfindungsgemäßen Tischplatte wiedergibt; und
- die Fig. 4: in einer zweiten Ausführungsform die Ansicht einer Unterseite einer modifizierten Tischplatte darstellt.

Wie die Figur 2 in Vergleich zur Figur 1 zeigt, ist die erfindungsgemäße Tischplatte 10 auf ihrer Unterseite US mit einer Beschichtungsplatte 12 versehen. Die Beschichtungsplatte weist eine Stärke bzw. Dicke D auf, die um ein Vielfaches größer ist als die Dicke der Kunststoffschichten (siehe USS und OSS in Figur 1). Beispielsweise beträgt die Stärke der Beschichtungsplatte 1,5 bis 18 mm. Die Beschichtungsplatte ist beispielsweise aus einem Dünnlaminat oder einem anderen feuchtebeständigen Material gefertigt und mit der Unterseite US der Tischplatte 10 verklebt. Dadurch kann die Beschichtungsplatte 12 bei auftretendem Verzug direkt die auf der Unterseite US sich dann ergebenden Zuspannungskräfte aufnehmen. Des Weiteren ergibt die Anbringung der Beschichtungsplatte 12 einen Isoliereffekt auf der Unterseite, der ebenfalls einen Formverzug der Tischplatte 10 verhindert.

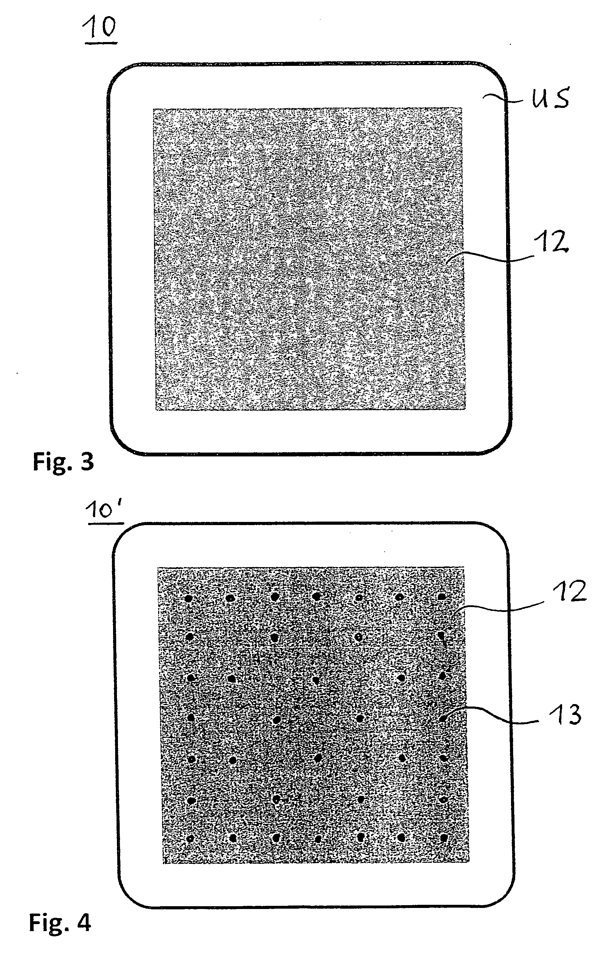

Wie in Figur 3 zu sehen ist, erstreckt sich der Bereich der Beschichtungsplatte 12 über weite Teile der Unterseite der Tischplatte 10. Versuche der Anmelderin haben ergeben, dass bereits ein flächiges Verkleben der Beschichtungsplatte 12 mit der Unterseite US ausreicht, um einen Verzug der Tischplatte entgegen zu wirken. Steife Kleber und dünne Klebefugen sind zu bevorzugen. Zum Verkleben sind reaktive Kleber, wie z.B. Epoxy-, Polyester-, Polyurethan-, AcrylatKleber, besonders gut geeignet. Das Verkleben kann auch mittels eines Schmelz- oder Heiß-Klebers erfolgen, d.h. durch ein sog. Hotmelt-Verkleben erfolgen.

Die Figur 4 stellt eine alternative Ausführungsform einer Tischplatte 10' dar, bei der die Beschichtungsplatte 12 mit der Unterseite zumindest an mehreren Fixierungspunkten 13 verschraubt ist oder ähnlich mechanisch fixiert ist. Versuche der Anmelderin haben ergeben, dass auch hinreichend viele punktuelle mechanische Fixierungen der Beschichtungsplatte 12 auf der Unterseite ausreichen, um die Stabilität gegen Formverzug der Tischplatte 10' deutlich zu verbessern. Vorzugsweise wird die Beschichtungsplatte 12 sowohl mit der Unterseite US verklebt wie auch verschraubt. Sogar die Ausgestaltung der Beschichtungsplatte 12 als Dünnlaminat mit einer geringeren Stärke von etwa 0,5 mm haben in Versuchen der Anmelderin gute Ergebnisse geliefert. Insgesamt hat sich gezeigt, dass die mechanische Verstärkungswirkung wie auch die Isoliereigenschaft (hinsichtlich Wärme und/oder Feuchtigkeit) der Beschichtungsplatte effektiv einen Formverzug der Tischplatte verhindern.

Als Rückseitenbeschichtung können Varianten bzw. andere Material zum Einsatz kommen, wie z.B. CPL (Continuous Pressure Laminate), HPL (High Pressure Laminate), Schichtstoff- oder Holzwerkstoffplatte oder auch eine Metallplatte. Es hat sich gezeigt, dass einem Formverzug der Tischplatte besonders effektiv dann entgegen gewirkt werden kann, wenn die Rückseitenbeschichtung vorzugsweise an bereits hergestellten Tischplatten durchgeführt wird, d.dh. wenn eine anschließende bzw. nachträgliche Rückseitenbeschichtung ausgeführt wird. Der E-Modul der Rückseitenbeschichtung bzw. Beschichtungsplatte sollte zumindest gleich groß sein wie der E-Modul des Formkörpers (Formteils). Vorzugsweise sollte der E-Modul der Rückseitenbeschichtung zumindest das 1,5-fache des E-Moduls des Formkörpers betragen.

Die hier vorgeschlagene Erfindung hat neben den zuvor genannten Vorteilen auch den Vorzug, dass die Maßnahme des Anbringens einer Beschichtungsplatte auch nachträglich an bereits gefertigten und ausgelieferten Tischplatten vorgenommen werden kann.

## Patentansprüche

1. Holzwerkstoff-basierte Tischplatte (10) für den Außenbereich mit einem Formkörper (11), der aus einer span- oder faserförmigen mit einem Bindemittel versetzten Pressmasse gefertigt ist, wobei der Formkörper (11) auf der Oberseite (OS) und der Unterseite (US) mit je einer Kunststoffschicht (OSS; USS) bedeckt ist, von denen zumindest die Kunststoffschicht (OSS) auf der Oberseite (OS) als Dekorschicht ausgebildet ist,
**dadurch gekennzeichnet,**
**dass** nur auf der Unterseite (US) der gefertigten Tischplatte (10) nachträglich eine Beschichtungsplatte (12) kraftschlüssig aufgebracht ist, deren Stärke (D) um ein Vielfaches größer ist als die Dicke der Kunststoffschichten (OSS, USS), und dass die Beschichtungsplatte (12) aus einem Material gefertigt ist, das einen Elastizitätsmodul aufweist, der um mindestens das 1,5-fache größer als der Elastizitätsmodul des Formkörpers (11) ist.

2. Tischplatte (10) nach Anspruch 1, **dadurch gekennzeichnet, dass** die Stärke (d) der Beschichtungsplatte (12) mindestens 1,5 mm beträgt.

3. Tischplatte (10) nach Anspruch 1, oder 2, **dadurch gekennzeichnet, dass** die Beschichtungsplatte (12) aus einem Kunststoffmaterial und/oder Holzmaterial gefertigt ist.

4. Tischplatte (10) nach einem der vorhergehenden Ansprüche, **dadurch gekennzeichnet, dass** die Beschichtungsplatte (12) mit der Unterseite (US) der Tischplatte (10) verklebt ist.

5. Tischplatte (10) nach Anspruch 4, **dadurch gekennzeichnet, dass** die Beschichtungsplatte (12) mit der Unterseite (US) der Tischplatte (10) mittels eines reaktiven Klebers, insbesondere eines Epoxy-, Polyester-, Polyurethan-, Acrylat-Klebers, verklebt ist.

6. Tischplatte (10) nach Anspruch 4, **dadurch gekennzeichnet, dass** die Beschichtungsplatte (12) mit der Unterseite (US) der Tischplatte (10) mittels eines Schmelz- oder Heiß-Klebers verklebt ist.

7. Tischplatte (10) nach einem der vorhergehenden Ansprüche, **dadurch gekennzeichnet, dass** die Beschichtungsplatte (12) mit der Unterseite (US) der Tischplatte (10) an mehreren Fixierungspunkten (13) mechanisch verbunden, insbesondere verschraubt, ist.

8. Tischplatte (10) nach einem der vorhergehenden Ansprüche, **dadurch gekennzeichnet, dass** die Beschichtungsplatte (12) aus einem Dünn-Laminat oder einer Schichtstoffplatte gefertigt ist.

9. Tischplatte (10) nach einem der vorhergehenden Ansprüche, **dadurch gekennzeichnet, dass** die Beschichtungsplatte (12) sich über einen Großteil der Unterseite (US) der Tischplatte (10) erstreckt, insbesondere mehr als 50% der Unterseite (US) abdeckt.

10. Verfahren zum Aufbau einer Holzwerkstoff-basierten Tischplatte (10) für den Einsatz im Außenbereich, wobei die Tischplatte einen Formkörper (11) aufweist, der aus einer span- oder faserförmigen mit einem Bindemittel versetzten Pressmasse gefertigt wird, wobei der Formkörper (11) auf der Oberseite (OS) und der Unterseite (US) mit je einer Kunststoffschicht (OSS; USS) bedeckt wird, von denen zumindest die Kunststoffschicht (OSS) auf der Oberseite (OS) als Dekorschicht ausgebildet wird,
**dadurch gekennzeichnet,**
**dass** nur auf der Unterseite (US) der gefertigten Tischplatte (10) nachträglich eine Beschichtungsplatte (12) kraftschlüssig aufgebracht wird, deren Stärke (D) um ein Vielfaches größer ist als die Dicke der Kunststoffschichten (OSS, USS), und dass die Beschichtungsplatte (12) aus einem Material gefertigt wird, das einen Elastizitätsmodul aufweist, der um mindestens das 1,5-fache größer als der Elastizitätsmodul des Formkörper (11) ist.

11. Verfahren nach Anspruch 10, **dadurch gekennzeichnet, dass** dass die Beschichtungsplatte (12) mit der Unterseite (US) der Tischplatte (10) verklebt wird, insbesondere mittels eines reaktiven Klebers, insbesondere eines Epoxy-, Polyester-, Polyurethan-, Acrylat-Klebers, verklebt wird oder mittels eines Schmelz- oder Heiß-Klebers verklebt wird.

12. Verfahren nach Anspruch 10 oder 11, **dadurch gekennzeichnet, dass** die Beschichtungsplatte (12) mit der Unterseite (US) der Tischplatte (10) an mehreren Fixierungspunkten (13) mechanisch verbunden, insbesondere verschraubt, wird.

## Claims

1. Wooden material-based table top (10) for outdoor use having a mold body (11) which is manufactured from a chip-like or fibrous molding material comprising a binding agent, wherein the mold body (11) on the upper side (OS) and lower side (US), in each case, is covered with a plastic material layer (OSS, USS) from which at least the plastic material layer (OSS) on the upper side (OS) is formed as a decorative layer,
**characterized in that**
only on the lower side (US) of the manufactured table top (10) a coating plate (12) is subsequently fixed in a force-fit manner, the coating plate having a thickness (D) being multiple times larger than the thickness of the plastic material layers (OSS, USS), and that the coating plate (12) is made of a material having a modulus of elasticity which is at least 1.5 times greater than the modulus of elasticity of the mold body (11).

2. Table top (10) of claim 1, **characterized in that** the thickness (d) of the coating plate (12) is at least 1.5 mm.

3. Table top (10) of claim 1 or 2, **characterized in that** the coating plate (12) is made of a plastic material and / or wood material.

4. Table top (10) of any of the preceding claims, **characterized in that** the coating plate (12) is glued with the lower side (US) of the table top (10).

5. Table top (10) of claim 4, **characterized in that** the coating plate (12) is glued or bonded with the lower side (US) of the table top (10) by means of a reactive adhesive, in particular an epoxy, polyester, polyurethane or acrylate adhesive.

6. Table top (10) of claim 4, **characterized in that** the coating plate (12) is glued with the lower side (US) of the table top (10) by means of a hot glue or hotmelt adhesive.

7. Table top (10) of any of the preceding claims, **characterized in that** the coating plate (12) is mechanically connected, in particular screwed, with the lower side (US) of the table top (10) at a plurality of fixing points (13).

8. Table top (10) of any of the preceding claims, **characterized in that** the coating plate (12) is made of a thin-laminate or flat-laminate.

9. Table top (10) of any of the preceding claims, **characterized in that** the coating plate (12) extends over a large part of the lower side (US) of the table top (10), in particular covering more than 50% of the lower side (US).

10. A method for building a wood-based table top (10) for outdoor use, wherein said table top comprises a mold body (11) which is manufactured from a chip-like or fibrous molding material comprising a binding agent, wherein the mold body (11) on the upper side (OS) and lower side (US), in each case, is covered with a plastic material layer (OSS, USS) from which at least the plastic material layer (OSS) on the upper side (OS) is formed as a decorative layer,
**characterized in that**
only on the lower side (US) of the manufactured table top (10) a coating plate (12) is subsequently fixed in a force-fit manner, the coating plate having a thickness (D) being multiple times larger than the thickness of the plastic material layers (OSS, USS), and that the coating plate (12) is made of a material having a modulus of elasticity which is at least 1.5 times greater than the modulus of elasticity of the mold body (11).

11. The method of claim 10, **characterized in that** the coating plate (12) is glued or bonded with the lower side (US) of the table top (10) by means of a reactive adhesive, in particular an epoxy, polyester, polyurethane or acrylate adhesive or by means of a hot glue or hot-melt adhesive.

12. The method of claim 10 or 11, **characterized in that** the coating plate (12) is mechanically connected, in particular screwed, with the lower side (US) of the table top (10) at a plurality of fixing points (13).

## Revendications

1. Plateau de table basé sur une matière dérivée du bois (10) pour un usage extérieur dlsposant un corps moulé (11) fabriqué à partir d'un matériau de moulage de type de copeaux ou fibreux comprenant un agent de liaison, dans lequel le corps moulé (11) est recouvert, dans chaque cas sur la face supérieure (OS) et sur la face inférieure (US), d'une couche de matériau plastique (OSS, USS), la couche de matériau plastique (OSS) sur la face supérieure étant au moins formée d'une couche décorative,
**caractérisé en ce que** une plaque de recouvrement (12) est fixée ultérieurement par fixation ferme sur la seule face inférieure (US) du plateau de table préfabriqué (10), le plateau de table ayant une épaisseur (D) qui est un multiple de l'épaisseur des couches de matière plastiques (OSS, USS), et la plaque de recouvrement (12) étant réalisée en un matériau ayant un module d'élasticité qui est au moins également à 1.5 fois le module d'élasticité du corps moulé (11).

2. Plateau de table (10) de la revendication 1, **caractérisé en ce que** l'épaisseur (d) de la plaque de recouvrement (12) est au moins égale à 1.5 mm.

3. Plateau de table (10) de la revendication 1 ou 2, **caractérisé en ce que** la plaque de recouvrement (12) est réalisée en matériau plastique ou/et en bois.

4. Plateau de table (10) suivant l'une quelconque des revendications précédentes, **caractérisé en ce que** la plaque de recouvrement (12) est collée sur la face inférieure (US) du plateau de table.

5. Plateau de table (10) de la revendication 4, **caractérisé en ce que** la plaque de recouvrement (12) est collée ou jointe à la seule face inférieure (US) du plateau de table au moyen d'un adhésif réactif, en particulier un adhésif époxy, polyester, polyuréthane ou acrylique.

6. Plateau de table (10) de la revendication 4, **caractérisé en ce que** la plaque de recouvrement (12° est collée sur la face inférieure (US) du plateau de table (10) au moyen d'une colle chauffée ou fondue par chauffage.

7. Plateau de table (10) suivant l'une quelconque des revendications précédentes, **caractérisé en ce que** la plaque de recouvrement (12) est fixée mécaniquement en plusieurs points de fixation (13), en particulier par des vis, à la face inférieure (US) du plateau de table (10).

8. Plateau de table (10) suivant l'une quelconque des revendications précédentes, **caractérisé en ce que** la plaque de recouvrement (12) est en stratifié fin ou plat.

9. Plateau de table (10) suivant l'une quelconque des revendications précédentes, **caractérisé en ce que** la plaque de recouvrement (12) s'étend sur une large portion de la face inférieure (US) du plateau de table (10), et notamment avec un recouvrement de plus de 50% de la face inférieure (US).

10. Un procédé de fabrication d'un plateau de table de table (10) pour usage externe, dans lequel ledit plateau de table comporte un corps moulé (11) fabriqué à partir d'un matériau de moulage de type à copeaux ou fibreux comprenant un agent de liaison, dans lequel le corps moulé (11) est recouvert, dans chaque cas sur la face supérieure (OS) et sur la face inférieure (US), d'une couche de matériau plastique (OSS, USS), la couche de matériau plastique (OSS) sur la face supérieure étant au moins formée d'une couche décorative,
**caractérisé en ce que** une plaque de recouvrement (12) est fixée ultérieurement par fixation ferme sur la seule face inférieure (US) du plateau de table préfabriqué (10), le plateau de table ayant une épaisseur (D) étant un multiple de l'épaisseur des couches de matériau plastique (OSS, USS), et la plaque de recouvrement (12) étant réalisée en un matériau ayant un module d'élasticité égal à au moins 1.5 fois le module d'élasticité du corps moulé (11).

11. La méthode de la revendication 10, **caractérisée en ce que** la plaque de recouvrement (12) est collée ou jointe à la face inférieure (US) du plateau de table (10) au moyen d'un adhésif réactif, en particulier un adhésif époxy, polyester, polyuréthane ou acrylique ou au moyen d'une colle chauffée ou fondue par chauffage.

12. La méthode de la revendication 10 ou 11, **caractérisée en ce que** la plaque de recouvrement (12) est fixée mécaniquement en plusieurs points de fixation (13), en particulier par des vis, à la face inférieure (US) du plateau de table (10).
